# EUROPÄISCHE PATENTSCHRIFT

(11) **EP 0 926 409 B1**
(45) Veröffentlichungstag und Bekanntmachung des Hinweises auf die Patenterteilung: **06.07.2005**
(21) Anmeldenummer: 98124185.4
(22) Anmeldetag: 21.12.1998
(51) Int. Cl.: F16J 15/34, F16J 15/36

(54) **Gleitringdichtung**
Mechanical face seal
Garniture mécanique d'étanchéité

(30) Priorität: 24.12.1997 DE 29722829 U
(43) Veröffentlichungstag der Anmeldung: 30.06.1999
(73) Patentinhaber: Kraffzik, Hans Jürgen, 33729 Bielefeld (DE)
(72) Erfinder: Kraffzik, Hans Jürgen, 33729 Bielefeld (DE)
(74) Vertreter: Stracke, Alexander, Dipl.-Ing.

(56) Entgegenhaltungen:
- DE-B- 1 074 342
- US-A- 2 650 117
- US-A- 3 291 492

## Beschreibung

Die Erfindung betrifft eine Gleitringdichtung, die in einer Bohrung eines Gehäuses dichtend einsetzbar ist, mit einem äußeren Balg aus einem elastischen Material, der eine zentrische Öffnung aufweist, in die ein formbeständiger Gleitring unverdrehbar festgesetzt ist und mit einem Federelement, welches eine Stirnfläche des Gleitringes gegen eine Dichtfläche eines Förderrades drückt, welches auf eine durch den Gleitring geführte, rotierend antreibbare Welle drehfest aufgesetzt ist. Die in Frage kommende Gleitringdichtung wird verwendet, um einen Antriebsblock abzudichten, wenn mittels des Förderrades eine Flüssigkeit gefördert wird. Der Antriebsblock ist üblicherweise ein Elektromotor oder ein Getriebemotor. Der Balg ist so gestaltet, daß er dichtend in eine Bohrung des Gehäuses eingesetzt wird und sich nicht verdreht. Auch der Gleitring dreht sich im Betrieb der Pumpe nicht. Der Gleitring wird aus einem geeigneten Werkstoff gefertigt. Das Federelement bewirkt, daß der Gleitring mit einer ausreichenden Kraft gegen die Dichtfläche des rotierend antreibbaren Förderrades gedrückt wird. Die in Frage kommende Gleitringdichtung ist in vielen Ausführungen bekannt. Bei bevorzugten Ausführungen wird als Federelement eine Kegelfeder mit mindestens drei Windungen verwendet. Bei diesen Ausführungen ergeben sich aufgrung der notwendigen Abmessungen der Kegelfedern relativ große Einbaumaße, so dass die Breiten der Gleitringdichtungen entsprechend groß sind. Insbesondere bei Haushaltsgeräten werden jedoch kompakte Einheiten notwendig, da die Größe dieser Geräte nicht beliebig verändert werden kann. Da das Förderrad mit einer relativ hohen Drehzahl angetrieben wird, ist es außerdem unvermeidbar, dass es aufgrund der Reibung zwischen dem Gleitring, der Gleitringdichtung und der Dichtfläche des Förderrades zu unangenehmen Geräuschen kommt, die besonders störend wirken, weil derartige Geräte üblicherweise in Küchen aufgestellt werden. Außerdem wird naturgemäß jeder Besitzer dazu neigen, die Qualität des Gerätes anzuzweifeln. Aus der US 2,650,117 ist eine Gleitringdichtung der eingangs erwähnten Art bekannt. Diese Gleitringdichtung besitzt einen elastischen Balg, der einen bezogen auf die Einbaulage radial nach außen gerichteten Ring aufweist, an dem sich ein halbkreisförmiges Mittelteil anschließt, welches bis auf die Außenfläche des Gleitringes geführt ist. Um den Gleitring gegen die Dichtfläche des Förderrades zu drücken, enthält die Gleitringdichtung noch ein Federelement, welches aus einzelnen Lamellen besteht, die durch Schlitze eines im Querschnitt halbkreisförmig gestalteten Ringes gebildet sind. Das Federelement besitzt entsprechend dem Balg einen radialen Außenring, wobei in der Einbaulage der Außenring des Balges und der Außenring des Federelementes in eine Ringnut einer metallischen Schale eingespannt sind. Bei dieser Gleitringdichtung treten die bereits genannten Nachteile auf.

Der Erfindung liegt die Aufgabe zugrunde, eine Gleitringdichtung der eingangs näher beschriebenen Art so zu gestalten, dass die Einbaumaße gegenüber den bekannten Ausführungen verringert werden können, und dass die störenden Geräusche verringert werden.

Die gestellte Aufgabe wird gelöst, indem das Federelement direkt auf den Gleitring wirkt und bogenförmig gestaltete Federlamellen aufweist, die an einem sich in axialer Richtung der Gleitringdichtung erstreckenden Außenring des Federelementes angeformt sind und im wesentlichen im Inneren des Außenringes liegen. Durch die bogenförmig gestalteten Federlamellen wird die Breite eines Dichtringes wesentlich geringer, so dass die erfindungsgemäße Gleitringdichtung besonders für enge Einbauten geeignet ist.

Die Federlamellen sind so ausgelegt, daß sie in der Einbaulage des Federelementes verformt werden, so daß die gesamte Federkraft durch die Rückstellkräfte erzeugt werden. Durch den Außenring wird sichergestellt, daß das Federelement eine große Kontaktfläche zu einer Innenfläche des Balges bildet. Da auch die Federlamellen gegenüber den Stirnkanten des Außenringes nicht vorstehen, wird trotz der guten Eigenschaften eine minimale Breite der gesamten Gleitringdichtung erreicht. Die Haftung in der Bohrung des Gehäuses wird dadurch erreicht, daß zumindest das Federelement so verspannt wird, daß radiale Kräfte auftreten, die dann über den Balg auf die Bohrung übertragen werden. Die Federlamellen können so ausgelegt werden, daß eine progressive, eine degressive oder eine lineare Federkennlinie entsteht.

Damit die von den Federlamellen aufgebrachten Axialkräfte gleichmäßig rundum auf den Federring übertragen werden, ist vorgesehen, daß die Anordnung der Federlamellen symmetrisch ist, wobei vorzugsweise die Federlamellen in einem gleichen Winkelabstand zueinander stehen. Bei einer bevorzugten Ausführungsform ist das Federelement mit sechs Federlamellen versehen. Zur Verringerung der Teile ist vorgesehen, daß der Außenring und die Federlamellen ein einstückiges Formteil bilden. Zweckmäßigerweise ist der Balg im Querschnitt C-förmig ausgebildet, wobei die den inneren und äußeren Ring verbindende Scheibe dem Förderrad zugewandt liegt. Demzufolge ist die dem Förderrad abgewandte Seite des Balges offen, so daß von dieser Seite aus das Federelement in den Balg eingesetzt werden kann. Um den Gleitring mit dem Balg zu verbinden, ist in weiterer Ausgestaltung vorgesehen, daß der die zentrische Öffnung begrenzende innere Ring des Balges von einem Federring umschlossen ist. Dadurch werden Radialkräfte übertragen. Damit das Federelement sicher innerhalb des Balges angeordnet ist, ist vorgesehen, daß der äußere Ring des Balges an der der Scheibe abgewandt liegenden, offenen Seite einen nach innen gerichteten Stützrand aufweist, gegen den sich der Außenring des Federelementes abstützt.

Die Federlamellen können wahlweise entweder auf den Federring drücken oder auch gegen die dem Förderrad abgewandt liegende Stirnfläche des Gleitringes. Im letzteren Fall ist in weiterer Ausgestaltung vorgesehen, daß der Gleitring an der dem Förderrad abgewandten Seite eine der Anzahl der Federlamellen entsprechende Stückzahl von Ausnehmungen oder Durchbrechungen aufweist, in die die freien Enden der Federlamellen eingreifen. Dadurch wird noch eine zusätzliche Verdrehsicherung zwischen dem Federelement und dem Gleitring erreicht.

Anhand der beiliegenden Zeichnungen wird die Erfindung noch näher erläutert.

Es zeigen:
- Figur 1: eine erfindungsgemäße Gleitringdichtung im Schnitt,
- Figur 2: eine der Figur 1 entsprechende Seitenansicht, mit Blick auf die Federlamellen,

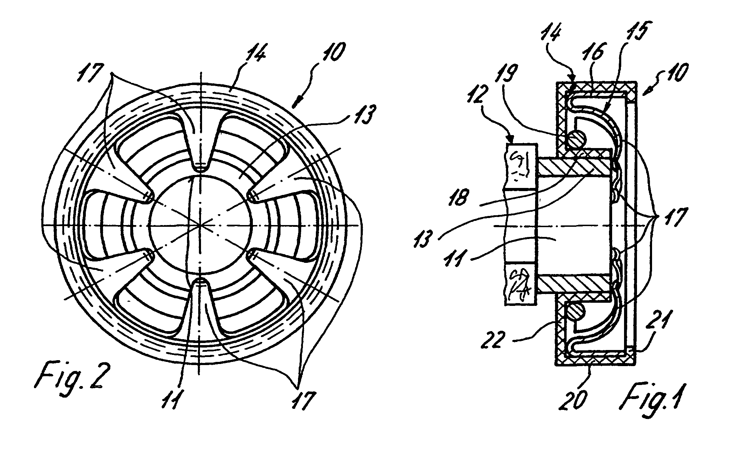

Die in den Figuren 1-2 dargestellte Gleitringdichtung 10 wird in eine entsprechend ausgelegte Bohrung eines nicht dargestellten Gehäuses eingesetzt und dient zur Abdichtung eines nicht dargestellten Antriebsblockes gegenüber einem Förderrad zum Fördern von Flüssigkeiten, vorzugsweise von Wasser. Die Gleitringdichtung 10 enthält eine zentrische Bohrung 11, durch die die nicht dargestellte Abtriebswelle des Antriebsblockes geführt ist. Auf diese Abtriebswelle ist ein andeutungsweise dargestelltes Förderrad 12 drehfest aufgesetzt. Das Förderrad 12 kann je nach Art der Flüssigkeit und Verwendungszweck gestaltet sein. Die Gleitringdichtung 10 enthält im Zentrum einen Gleitring, der formbeständig und aus einem entsprechenden Material, beispielsweise Kohlefasern, gefertigt ist. Der kritische, unbedingt abzudichtende Bereich wird durch die beiden sich kontaktierenden Flächen des Förderrades 12 und des Gleitringes 13 gebildet. Im Betriebszustand, d. h. bei angetriebener Abtriebswelle, steht auch der Gleitring 13 still. Dieser ist in eine Bohrung eines Balges aus einem elastischen Material eingesetzt. Mittels eines Federelementes 15 wird der Gleitring 13 gegen die Dichtfläche des Förderrades 12 gedrückt. Dazu sind an einem Außenring 16 des Federelementes im dargestellten Ausführungsbeispiel sechs bogenförmig gestaltete Federlamellen 17 angeformt. Der Außenring 16 bildet mit den Federlamellen 17 ein einstückiges Formteil. Die freien, dem Außenring 16 abgewandt liegenden Enden der Federlamellen 17 drücken bei den Ausführungsbeispielen gemäß den Figuren 1, 4 und 5 gegen die rückwärtige, dem Förderrad abgewandt liegende Stirnfläche des Gleitringes 13. Dadurch wird mit einer rundum gleichmäßig verteilten Axialkraft der bereits erwähnte kritische Bereich ständig abgedichtet. Der Balg 14 ist im Querschnitt C-förmig gestaltet, so daß der Gleitring 13 von einem inneren Ring 18 des Balges 14 umschlossen ist. Die Gleitringdichtung 10 ist außerdem noch mit einem Federring 19 ausgestattet. Dieser Federring umschließt den inneren Ring 18 des Balges 14, so daß mit einer bestimmten Radialkraft der innere Ring 18 gegen den Gleitring 13 gedrückt wird. Dadurch wird außerdem die Verbindung zwischen dem Balg 14 und dem Gleitring 13 geschaffen.

Wie die Figuren zeigen, sind die Federlamellen bogenförmig gestaltet. Beim Einsetzen in den Balg 14 werden sie so verformt, daß durch die Rückstellkräfte die Axialkraft erzeugt wird. Die Federlamellen und der Außenring 16 des Federelementes 15 sind aus Metall, vorzugsweise aus Stahl, gefertigt. Wie die Figur 2 zeigt, verjüngen sich die Federlamellen 17 zum freien Ende hin. Aus den Figuren ergibt sich außerdem, daß die Federlamellen innerhalb der Kontur des Außenringes 16 liegen, so daß die Gleitringdichtung eine minimale Breite hat. Zur Abstützung des Außenringes 16 am Balg 14 ist der äußere Ring 20 des Balges 14 an der dem Förderrad 12 abgewandten Seite mit einem nach innen gerichteten Stützrand 21 ausgerüstet.

## Patentansprüche

1. Gleitringdichtung (10), die in eine Bohrung eines Gehäuses dichtend einsetzbar ist, mit einem äußeren Balg (14) aus einem elastischen Material, der eine zentrische Öffnung aufweist, in die ein formbeständiger Gleitring (13) unverdrehbar festgesetzt ist und mit einem Federelement (15), welches eine Stirnfläche des Gleitringes (13) gegen eine Dichtfläche des Förderrades (12) drückt, welches auf eine durch den Gleitring (13) geführte, rotierend antreibbare Welle drehfest aufgesetzt ist, **dadurch gekennzeichnet, dass** das Federelement (15) direkt auf den Gleitring (13) wirkt und bogenförmig gestaltete Federlamellen (17) aufweist, die an einem sich in axialer Richtung der Gleitringdichtung (10) erstreckenden Außenring (16) des Federelementes (15) angeformt sind und im wesentlichen im Inneren des Außenringes (20) des Balges liegen.

2. Gleitringdichtung nach Anspruch 1, **dadurch gekennzeichnet, dass** die Federlamellen (17) symmetrisch angeordnet sind und vorzugsweise in einem gleichbleibenden Winkelabstand zueinander stehen.

3. Gleitringdichtung nach Anspruch 1, **dadurch gekennzeichnet, dass** der Balg (14) im Querschnitt C-förmig ausgebildet ist, wobei die den inneren und äußeren Ring (18, 20) verbindende Scheibe (20) dem Förderrad (12) zugewandt liegt.

4. Gleitringdichtung nach einem oder mehreren der vorhergehenden Ansprüche 1 bis 3, **dadurch gekennzeichnet, dass** die zentrische Öffnung des Balges (14) von einem inneren Ring (18) begrenzt ist, der von einem den inneren Ring (18) gegen den Gleitring (14) drückenden Federring (19) umschlossen ist.

## Claims

1. Mechanical face seal (10) which can be fitted into a bore of a housing in a sealing manner, comprising an outer bellows (14) made of an elastic material and having a central opening into which a dimensionally stable sliding ring (13) is fastened in an unrotatable manner and comprising a spring element (15) which presses an end face of the sliding ring (13) against a sealing face of the conveying wheel (12) which is mounted in a rotationally fixed manner onto a shaft which can be driven to rotate and which is guided through the sliding ring (13), **characterized in that** the spring element (15) acts directly on the sliding ring (13) and has bow-shaped spring lamellae (17) which are integrally formed on an external ring (16) of the spring element (15) extending in the axial direction of the mechanical face seal (10) and lie substantially on the inside of the external ring (20) of the bellows.

2. Mechanical face seal according to Claim 1, **characterized in that** the spring lamellae (17) are arranged symmetrically and are preferably situated at a uniform angular distance from one another.

3. Mechanical face seal according to Claim 1, **characterized in that** the bellows (14) is designed with a C-shaped cross section, the disc (22) connecting the inner and outer ring (18, 20) being directed towards the conveying wheel (12).

4. Mechanical face seal according to one or more of the preceding Claims 1 to 3, **characterized in that** the central opening of the bellows (14) is bounded by an inner ring (18) which is enclosed by a spring ring (19) pressing the inner ring (18) against the sliding ring (13).

## Revendications

1. Garniture d'étanchéité à anneau glissant (10) susceptible d'être insérée, pour assurer l'étanchéité, dans un perçage d'un boîtier, comprenant un soufflet extérieur (14) en matériau élastique présentant une ouverture centrale dans laquelle un anneau glissant (13) résistant à la déformation est fixé sans possibilité de rotation, et comprenant un élément élastique (15) qui appuie une face frontale de l'anneau glissant (13) contre une surface d'étanchéité de la roue d'alimentation (12), qui est montée sans possibilité de rotation sur un arbre guidé par l'anneau glissant (13) et susceptible d'être entraîné en rotation, **caractérisée en ce que** l'élément élastique (15) agit directement sur l'anneau glissant (13) et présente des lamelles élastiques (17) arquées qui sont formées sur une bague extérieure (16) de l'élément élastique (15) s'étendant dans la direction axiale de la gamiture d'étanchéité à anneau glissant (10), et sont présentes pour l'essentiel à l'intérieur de la bague extérieure (20) du soufflet.

2. Garniture d'étanchéité à anneau glissant selon la revendication 1, **caractérisée en ce que** les lamelles élastiques (17) sont disposées de façon symétrique et, de préférence, selon un écart angulaire constant les unes par rapport aux autres.

3. Garniture d'étanchéité à anneau glissant selon la revendication 1. **caractérisée en ce que** le soufflet (14) présente une section transversale en forme de C, le disque (20) qui relie la bague intérieure et la bague extérieure (18, 20) étant orienté en direction de la roue d'alimentation (12).

4. Garniture d'étanchéité à anneau glissant selon l'une ou plusieurs des précédentes revendications 1 à 3, **caractérisée en ce que** l'ouverture centrale du soufflet (14) est délimitée par une bague intérieure (18), qui est entourée par un anneau élastique (19) qui appuie la bague intérieure (18) contre l'anneau glissant (14).
